(19)

Europäisches Patentamt

European Patent Office

Office européen des brevets

(11)　EP 4 542 843 A1

(12)　EUROPEAN PATENT APPLICATION

published in accordance with Art. 153(4) EPC

(43) Date of publication:
23.04.2025　Bulletin 2025/17

(21) Application number: 22946148.8

(22) Date of filing: 14.06.2022

(51) International Patent Classification (IPC):
$H02M\ 7/538\ ^{(2007.01)}$　　$H02M\ 7/42\ ^{(2006.01)}$

(52) Cooperative Patent Classification (CPC):
H02M 7/42; H02M 7/538; Y02B 70/10

(86) International application number:
PCT/CN2022/098699

(87) International publication number:
WO 2023/240449 (21.12.2023 Gazette 2023/51)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Solax Power Network
Technology (Zhejiang) Co., Ltd.
Zhejiang 311599 (CN)

(72) Inventors:
• WEI, Qikang
Hangzhou, Zhejiang 311599 (CN)
• LIU, Chaohou
Hangzhou, Zhejiang 311599 (CN)

• SHI, Xinmiao
Hangzhou, Zhejiang 311599 (CN)
• ZHANG, Xiangping
Hangzhou, Zhejiang 311599 (CN)
• WANG, Jianxing
Hangzhou, Zhejiang 311599 (CN)
• WEI, Siwang
Hangzhou, Zhejiang 311599 (CN)
• SUN, Yu
Hangzhou, Zhejiang 311599 (CN)

(74) Representative: Zaboliene, Reda
Metida
Business center Vertas
Gyneju str. 16
01109 Vilnius (LT)

(54) **DISCONTINUOUS PULSE WIDTH MODULATION METHOD AND THREE-PHASE INVERTER MODULATION CIRCUIT**

(57)　The present application relates to a discontinuous pulse width modulation method and to a three-phase inverter modulation circuit, wherein the discontinuous pulse width modulation method, on one hand, reduces the number of switching actions relative to a traditional SVPWM method, thereby reducing power consumption and improving the working efficiency of the inverter, and on the other hand, greatly increases stability relative to a traditional DPWM method, is capable of stable operation even with a continuously changing modulation ratio, and incorporates two advantages in low power consumption and high stability, the width modulation method provided by the present application likewise does not need to switch between different modulation modes.

S100
Generating a three-phase voltage original signal wave

S200
Adding a zero-sequence component into the three-phase voltage original signal wave to obtain a wave added with the zero-sequence component

S300
Comparing the signal wave added with the zero-sequence component served as a modulation wave with a high frequency triangular carrier wave to generate a switch transistor driving signal of each IGBT device

S400
Controlling each IGBT device to operate according to the switch transistor driving signal of each IGBT device

FIG. 1

EP 4 542 843 A1

**Description**

TECHNICAL FIELD

The subject matter herein generally relates to three-phase inverter modulation technical field, in particular to a method of discontinuous pulse width modulation and a three-phase inverter modulation circuit.

BACKGROUND

Discontinuous pulse width modulation (DPWM) is also called as a DC bus clamped modulation, which is a common modulation manner in the three-phase inverter. There are six main manners of the DPWM modulation, which are DPWMO, DPWM1, DPWM2, DPMW3, DPWMMIN, DIWMMAX. Using the method of discontinuous pulse width modulation may reduce times of switching actions, and it is in favor of decreasing the switching loss of the semiconductor device.
One of the most application discontinuous manners is the DPWMO. This modulation manner has an advantage in a lower switching loss in relative to the space vector pulse width modulation (SVPWM) when the modulation ratio is higher. But when the modulation becomes lower, the current harmonics outputted by the inverter using the DPWM modulation manner becomes worse, and the operation stability also becomes worse, even the inverter is unable to work normally. For the inverter with a stability in both of a DC input and an alternating voltage, the discontinuous modulation is very appropriate. However, in actual working environment, such as a photovoltaic inverter, an inputting voltage range of PV may be changed from 100V to 1000V, and the alternating voltage may be fluctuated from 180V to 260V. Thus, the modulation ratio mainly depends on a ratio between the alternating voltage and the DC bus voltage. Thus, the change of the modulation ratio has a larger range. This results in the apply of the regular method of discontinuous modulation being limited.
For avoiding the problems caused by the discontinuous modulation, such as the harmonics and the stability, some inverter only uses the SVPWM modulation. Some inverters uses a manner of switching between several modulation manners, for example, when the modulation ratio is higher, the DPWMO is used, when the modulation ratio is lower, it is changed to the SVPWM modulation. This method of switching the modulation manners will bring a risk in stability, if switching to the SVPWM modulation, there is a deficiency in the loss increasing and the efficiency decreasing in relative to the discontinuous modulation.
Therefore, the method of traditional DPWMO modulation manner is unable to simultaneously take the lower loss and the high stability.

SUMMARY OF THE DISCLOSURE

Based on this, it is necessary to provide a method of discontinuous pulse width modulation and a three-phase inverter modulation circuit against the problem in the method of traditional three-phase inverter modulation being unable to simultaneously take the lower loss and the high stability.
The present application provides a method of discontinuous pulse width modulation, applied in a three-phase inverter circuit.
The method of discontinuous pulse width modulation includes:

Generating a three-phase voltage original signal wave;
Adding a zero-sequence component into the three-phase voltage original signal wave to obtain a signal wave added with the zero-sequence component;
Comparing the signal wave added with the zero-sequence component as a modulation wave with a high frequency triangular carries wave to generate a switch transistor driving signal of each IGBT device; and
Controlling each IGBT device to operate according to the switch transistor driving signal of each IGBT device.

In another aspect, the present disclosure provides a three-phase inverter modulation circuit.
The three-phase inverter modulation circuit includes:

A three-phase inverter circuit;
A sampling circuit, electrically connected with the three-phase inverter circuit; and
A modulator, the modulator electrically connected with the three-phase inverter, the modulator further electrically connected with the sampling circuit; the modulator is configured to execute the method of discontinuous pulse width modulation as the referred foregoing content.

The present application relates to the method of discontinuous pulse width modulation and the three-phase inverter modulation circuit of the present application, the method of discontinuous pulse width modulation, in one hand, reduces the number of switching actions relative to a traditional SVPWM method, thereby a power consumption is reduced and a working efficiency of the inverter is improved, and on the other hand, greatly increases stability relative to a traditional DPWM method, is capable of stable operation even with a continuously changing modulation ratio, and incorporates two advantages in low power consumption and high stability, the width modulation method provided by the present application likewise does not need to switch between different modulation modes.

BRIEF DESCRIPTION OF THE FIGURES

FIG. 1 is a flowchart of an embodiment of a method of discontinuous pulse width modulation according to the present application.

FIG. 2 is a circuit diagram of one embodiment of a three-phase inverter modulation circuit according to the present application.

FIG. 3 is a circuit diagram of another embodiment of a three-phase inverter modulation circuit according to the present application.

FIG. 4 is a schematic diagram view of comparing the modulation wave of A phase and a high frequency carrier wave in the method of discontinuous pulse width modulation, when the modulation ratio is 1, according to the present application.

FIG. 5 is a waveform diagram view of a switch transistor driving signal of a first IGBT device, a switch transistor driving signal of a second IBGT device, a switch transistor driving signal of a third IBGT device, and a switch transistor driving signal of a fourth IBGT device in the method of discontinuous pulse width modulation when the modulation ratio is 1, according to the present application.

FIG. 6 is a complex waveform diagram view of an original signal wave of A phase and a switch transistor driving signal of a first IGBT device in a traditional method of SVPWM modulation when the modulation ratio is 1.

FIG. 7 is a complex waveform diagram view of an original signal wave of A phase and a zero-sequence component in a traditional method of SVPWM modulation when the modulation ratio is 1.

FIG. 8 is a complex waveform diagram view of an original signal wave of A phase and a switch transistor driving signal of a first IGBT device in a traditional method of DPWMO modulation when the modulation ratio is 1.

FIG. 9 is a complex waveform diagram view of an original signal wave of A phase and a zero-sequence component in a traditional method of DPWMO modulation when the modulation ratio is 1.

FIG. 10 is a complex waveform diagram view of an original signal wave of A phase and a switch transistor driving signal of a first IGBT device in the method of discontinuous pulse width modulation when the modulation ratio is 1, according to the present application.

FIG. 11 is a complex waveform diagram view of an original signal wave of A phase and a zero-sequence component in the method of discontinuous pulse width modulation when the modulation ratio is 1, according to the present application.

FIG. 12 is a complex waveform diagram view of an original signal wave of A phase and a switch transistor driving signal of a first IGBT device in a traditional method of SVPWM modulation when the modulation ratio is 0.75.

FIG. 13 is a complex waveform diagram view of an original signal wave of A phase and a zero-sequence component in a traditional method of SVPWM modulation when the modulation ratio is 0.75.

FIG. 14 is a complex waveform diagram view of an original signal wave of A phase and a switch transistor driving signal of a first IGBT device in a traditional method of DPWMO modulation when the modulation ratio is 0.75.

FIG. 15 is a complex waveform diagram view of an original signal wave of A phase and a zero-sequence component in a traditional method of DPWMO modulation when the modulation ratio is 0.75.

FIG. 16 is a complex waveform diagram view of an original signal wave of A phase and a switch transistor driving signal of a first IGBT device in the method of discontinuous pulse width modulation when the modulation ratio is 0.75, according to the present application.

FIG. 17 is a complex waveform diagram view of an original signal wave of A phase and a zero-sequence component in the method of discontinuous pulse width modulation when the modulation ratio is 0.75, according to the present application.

FIG. 18 is a complex waveform diagram view of an original signal wave of A phase and a switch transistor driving signal of a first IGBT device in a traditional method of SVPWM modulation when the modulation ratio is 0.5.

FIG. 19 is a complex waveform diagram view of an original signal wave of A phase and a zero-sequence component in a traditional method of SVPWM modulation when the modulation ratio is 0.5.

FIG. 20 is a complex waveform diagram view of an original signal wave of A phase and a switch transistor driving signal of a first IGBT device in a traditional method of DPWMO modulation when the modulation ratio is 0.5.

FIG. 21 is a complex waveform diagram view of an original signal wave of A phase and a zero-sequence component in a traditional method of DPWMO modulation when the modulation ratio is 0.5.

FIG. 22 is a complex waveform diagram view of an original signal wave of A phase and a switch transistor driving signal of a first IGBT device in the method of discontinuous pulse width modulation when the modulation ratio is 0.5, according to the present application.

FIG. 23 is a complex waveform diagram view of an original signal wave of A phase and a zero-sequence component in the method of discontinuous pulse width modulation when the modulation ratio is 0.5, according to the present application.

Reference number:

10, three-phase inverter circuit; 110, DC bus; 111, positive bus capacitor; 112, negative bus capacitor; 121, first IGBT device; 122, second IGBT device; 123, third IGBT device; 124, fourth IGBT device; 131 fifth IGBT device; 132, sixth IGBT device; 133, seventh IGBT device; 134, eighth IGBT device; 1141, ninth IGBT device; 142, tenth IGBT device; 143, eleventh IGBT device; 144, twelfth IGBT device; 151, first filter inductor; 152, second filter inductor; 153, third filter inductor; 160, first filter capacitor; 161, upper plate of the first filter capacitor; 162, lower plate of the first filter capacitor; 170, the second filter capacitor; 161, upper plate of the second filter capacitor; 162, lower plate of the second filter capacitor; 180, third filter capacitor; 181, upper plate of the third filter capacitor; 182, lower plate of the third filter capacitor; 190, neutral wire; 20, sampling circuit; 30, regulator.

DETAILED DESCRIPTION

To make the objectives, technical solutions, and advantages of the present application clearer and more comprehensible, the following further describes the present application in detail with reference to the accompanying drawings and embodiments. It should be understood that the specific embodiments described herein are merely used to explain the present application, but are not intended to limit the present application.

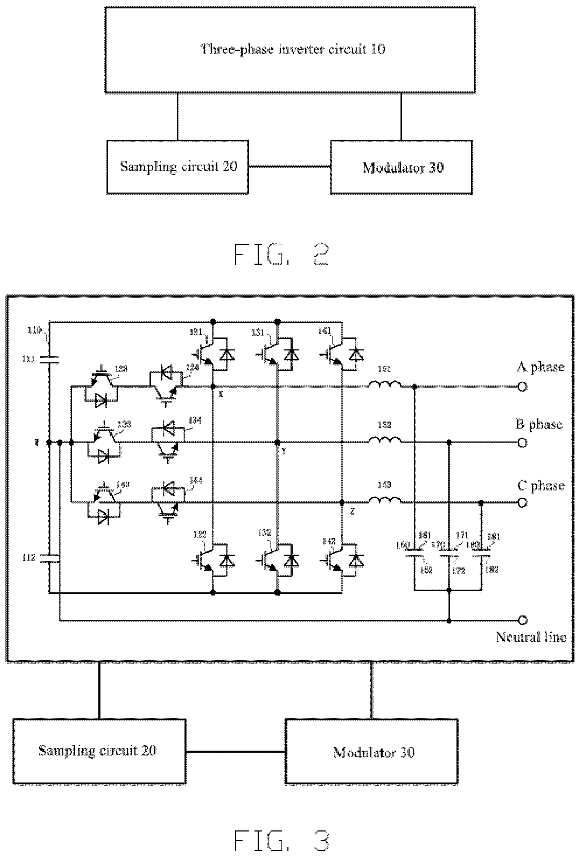

The present application provides a method of discontinuous pulse width modulation. It needs to be noted that, the method discontinuous pulse width modulation provided by the present application may be applied in a three-phase two-level circuit, or be applied in a three-phase three-level circuit. FIG. 3 shows a circuit diagram view of the three-phase inverter modulation circuit of the present application, the method of discontinuous pulse width modulation applied in the three-phase inverter modulation circuit as shown in FIG. 3. The three-phase inverter modulation circuit shown in FIG. 3 is a T type three-phase three-level circuit.

Besides, for the method of discontinuous pulse width modulation provided by the present application, the execution subject is not limited. Optionally, for the method of discontinuous pulse width modulation provided by the present application, the execution subject is a modulator in the three-phase inverter modulation circuit. The modulator may include one or more controllers.

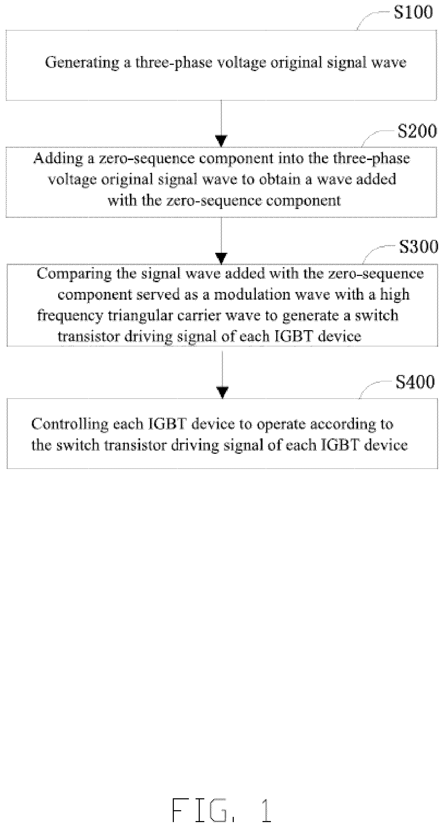

As shown in FIG. 1, in an embodiment of the present application, the method of discontinuous pulse width modulation includes the following steps S100 to S400.

In block S100, a three-phase voltage original signal wave is generated.

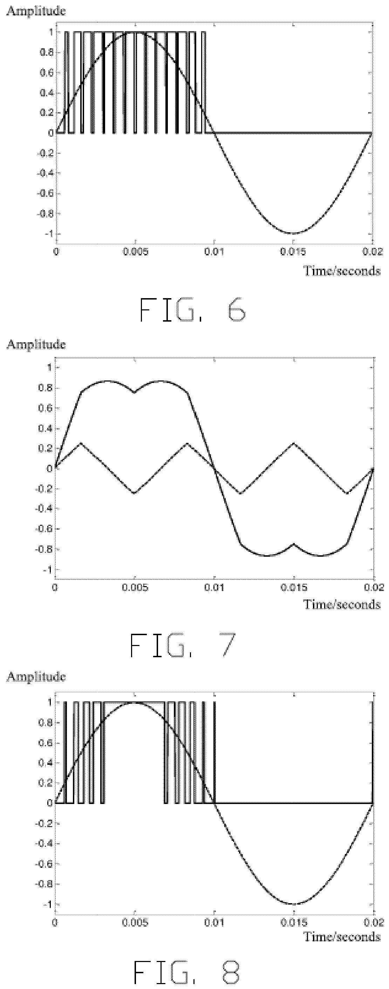

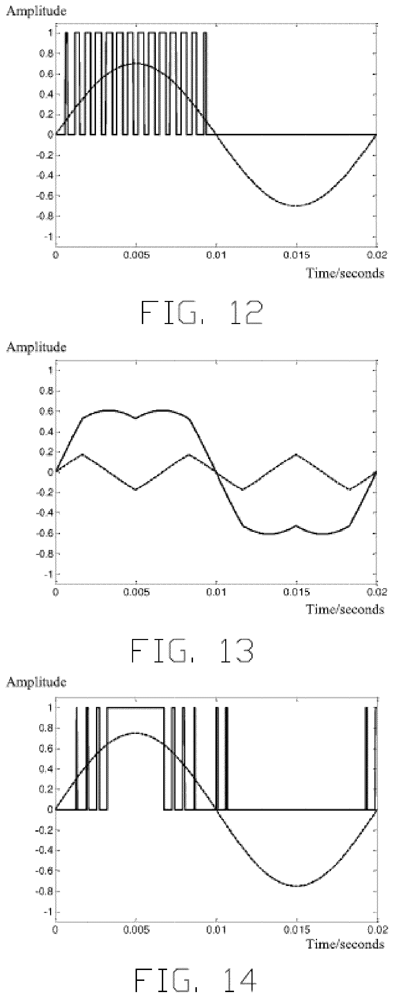

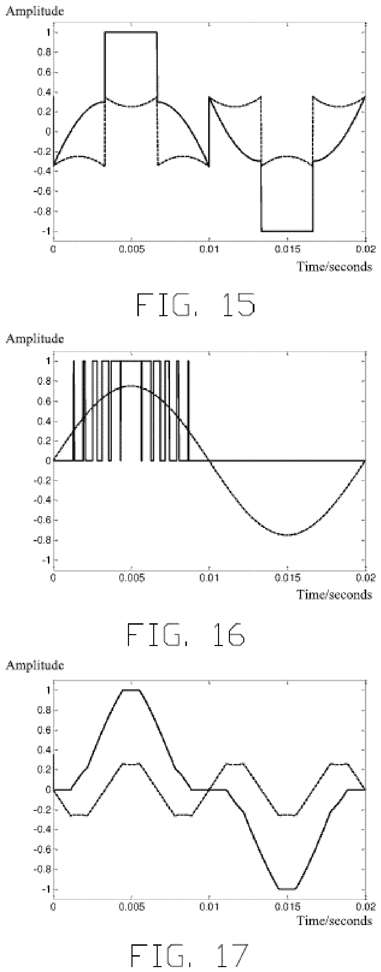

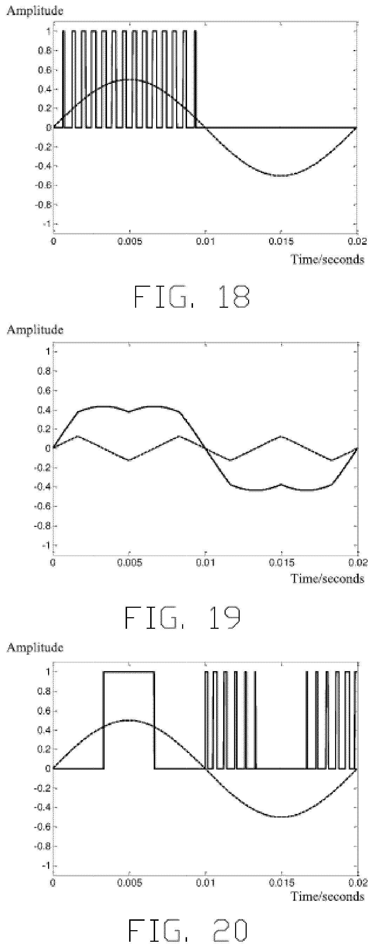

In detail, the three-phase voltage original wave is a sine wave, as shown in FIGS. 6, 8, 10, 12, 14, 16, 18, 20, and 22, dotted portions indicate waveforms of A phase in the three-phase voltage original signal wave.

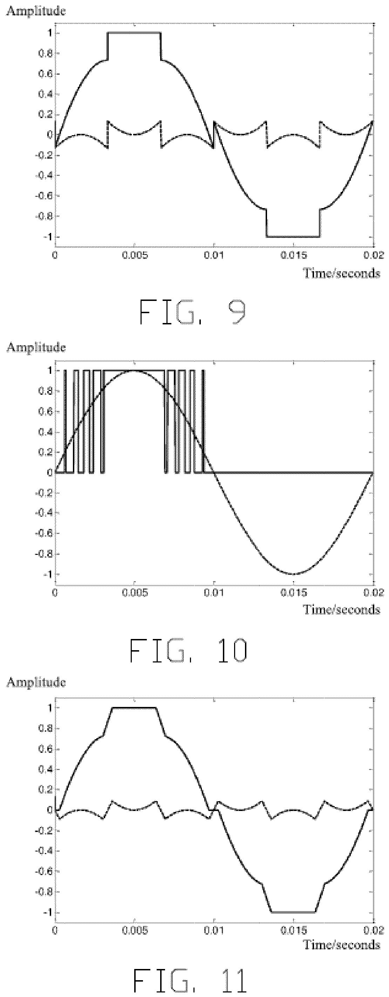

The dotted portions in FIGS. 10, 16, and 22 indicate the waveform of A phase in the three-phase voltage original wave of the method of discontinuous pulse width modulation of the present application. An abscissa is time, and an ordinate is an amplitude generated by the normalized voltage value.

Firstly, the modulator controls the sampling circuit to obtain a voltage of the DC bus, a three-phase voltage, and a three-phase current. After sampling, the sampling circuit inputs the voltage of the DC bus, the three-phase voltage, and the three-phase current into the modulator. Further, the modulator calculates and generates the three-phase voltage original signal wave according to the voltage of the DC bus, the three-phase voltage, and the three-phase current.

The three-phase voltage original signal wave is formed by superposing a fundamental wave and a part of harmonic.

In block S200, a zero-sequence component is added into the three-phase voltage original signal wave to obtain a signal wave added with the zero-sequence component.

In detail, the signal wave with the zero-sequence component serves as a modulating wave. As shown in FIGS. 11, 17, and 23, the sloid portions indicate the waveform of the modulating wave of the A phase in the three-phase voltage original signal wave of the method of discontinuous pulse width modulation provided by the application, and the dotted portions indicated the waveform of the zero-sequence component. An abscissa is time, and an ordinate is an amplitude generated by the normalized voltage values.

In block S300, the signal wave added with the zero-sequence component served as a modulating wave is compared with a high frequency triangular carrier wave, and a switch transistor driving signal of each IGBT device is generated.

In detail, while applying the method of discontinuous pulse width modulation in the three-phase three-level circuit, the modulating wave is respectively compared with two high frequency triangular carrier waves, the amplitudes of one of the two high frequency triangular carrier waves is from 0 to 1, and the amplitudes of another of the two high frequency triangular carrier waves is from -1 to 1. The referred amplitudes herein are the amplitudes generated by the normalized voltage values. A frequency range of the high frequency is the frequency range being larger than or equal to 3kHz and being less than or equal to 50kHZ.

In block S400, each IGBT device is controlled according to the switch transistor driving signal of each IGBT device.

The method of discontinuous pulse width modulation, on one hand, reduces the number of switching actions relative to a traditional SVPWM method, thereby reducing power consumption and improving the working efficiency of the inverter, and on the other hand, greatly increases stability relative to a traditional DPWM method, is capable of stable operation even with a continuously changing modulation ratio, and incorporates two advantages in low power consumption and high stability, the method of discontinuous pulse width modulation provided by the present application likewise does not need to switch between different modulation modes.

In one embodiment, the block S100 includes the following steps S110 to S120.

In block S110, the three-phase voltage original signal wave is generated, a voltage value of each phase in the three-phase voltage original signal wave is shown as the following formular 1.

$$\begin{cases} U_a = m\cos\theta + U_{ah} \\ U_b = m\cos\left(\theta - \dfrac{2\pi}{3}\right) + U_{bh} \\ U_c = m\cos\left(\theta + \dfrac{2\pi}{3}\right) + U_{ch} \end{cases}$$

Formular 1

Wherein, m represents a modulation ratio. θ represents a vector angle; Ua represents the voltage value of the A phase; Ub represents the voltage value of a B phase; Uc represents the voltage value of a C phase; Uah represents a harmonic component of the A phase; Ubh represents a harmonic component of the B phase; Uch represents a harmonic component of the C phase.

In detail, in this step, the voltage values Ua, Ub, and Uc are normalized processed. In detail, the voltage value of each phase is divided by the voltage value of the DC bus in half, and the voltage value of each phase is converted into a value between -1 and 1, which is called as the amplitude in the present application and is convenient to compare with the high frequency triangular carrier wave. After normalized, the carrier wave is a continuous triangular wave with the amplitude at 1. Thus, m is the amplitude of the three-phase voltage, and also is the modulation ratio.

In block S120, a minimum value of the three-phase voltage and a maximum value of the three-phase voltage, the definition manner of the minimum value and the maximum value of the three-phase voltage is the following formular 2.

$$\begin{cases} U_{max} = \max\left(U_a, U_b, U_c\right) \\ U_{min} = \min\left(U_a, U_b, U_c\right) \end{cases}$$

Formular 2

Wherein, Umax represents the maximum value of the three-phase voltage. Umin represents the minimum value of the three-phase voltage; Ua represents the voltage value of the A phase; Ub represents the voltage value of the B phase; Uc represents the voltage value of the C phase.

In detail, in this step, the maximum value of the three-phase voltage and the minimum value of the three-phase voltage are respectively obtained.

In one embodiment of the present application, the block S200 includes the block S210.

In block S210, the zero-sequence component is defined. An expression of the zero-sequence component is shown as the following formular 3.

$$U_z = -kU_{max} - (1-k)U_{min} + (2k-1)$$

Formular 3

Wherein, Uz represents the zero-sequence component; Umax represents the maximum value of the three-phase voltage; Umin represents the minimum value of the three-phase voltage; k represents a coefficient of calculating the zero-sequence component.

In detail, in the method of discontinuous pulse width modulation, k may be taken at 0, or be taken at 1, or be taken alternately varies between 1 and 0.

In one embodiment of the present application, the block S200 further includes the block S220.

In block S220, the zero-sequence component is added into the voltage value of each phase in the three-phase voltage original signal wave to obtain the signal wave added with the zero-sequence component. A formular of the voltage value of each phase of the signal wave added with the zero-sequence component is a following formular 4.

$$\begin{cases} U_{as} = U_a + U_z \\ U_{bs} = U_b + U_z \\ U_{cs} = U_c + U_z \end{cases}$$

Formular 4

Wherein, Uas represents the voltage value of the A phase added with the zero-sequence; Ubs the voltage value of the B phase added with the zero-sequence; Ucs represents the voltage value of the C phase added with the zero-sequence.

In detail, the present application generates the modulation wave by superimposing the zero-sequency component on the original signal wave.

In one embodiment, the block S300 includes the following blocks S310 to S360.

In block S310, when the vector angle is located in a first angle range, the coefficient of calculating the zero-sequence component is taken at 0. The first angle range is a range being greater than or equal to 0 and less than or equal to one-third of π minus β.

In block S320, when the vector angle is located in a second angle range, the coefficient of calculating the zero-sequence component is taken at 0. The second angle range is a range being greater than or equal to two-thirds π plus β and less than or equal to π minus β.

In block S330, when the vector angle is located in a third angle range, the coefficient of calculating the zero-sequence component is taken at 0. The third angle range is a range being greater than or equal to four-thirds π plus β and less than or equal to five-thirds of π minus β.

In block S340, when the vector angle is located in a fourth angle range, the coefficient of calculating the zero-sequence component is taken at 1. The fourth angle range is a range being greater than or equal to one-third π plus β and less than or equal to two-thirds of π minus β.

In block S350, when the vector angle is located in a fifth angle range, the coefficient of calculating the zero-sequence component is taken at 1. The fifth angle range is a range being greater than or equal to π plus β and less than or equal to four-thirds of π minus β.

In block S360, when the vector angle is located in a sixth angle range, the coefficient of calculating the zero-sequence component is taken at 1. The sixth angle range is a range being greater than or equal to five-thirds π plus β and less than or equal to 0 minus β. B is a predefined angle value.

In detail, FIG. 10 shows a composite waveform of the original signal wave of the A phase and the switch transistor driving signal of the first IGBT device in the method of discontinuous pulse width modulation provided by the present application when the modulation ratio is 1. FIG. 10 includes two waveforms, one of the waveforms is the waveform of the original signal wave of the A phase, which is the waveform between point X and the neutral wire (as the dotted sinusoid portion in FIG. 10). Another of the two waveforms is the waveform of the switch transistor driving signal of the first IGBT device (as the solid line square wave portion in FIG. 10).

In FIG. 10, the amplitude of the original signal wave is 1, during a time from 60 degrees to 120 degrees, the driving of the corresponding first IGBT device remains being turned on. In that means, there is an accumulated time of 60 degrees in the 180 degrees, in which the switch does not act, thus it is capable of reducing the loss.

The process of comparing the modulation wave with the high frequency triangular carrier wave will explained as below.

The following content uses the A phase as an example, because the waveforms shown in FIGS. 6-23 of the present application are related to the A phase.

As shown in FIG. 3, the first IGBT device, the second IGBT device, the third IGBT device, and the fourth IGBT device form a bridge arm of the A phase. The first IGBT device serves as the upper bridge-arm switch transistor of the A phase, the second IGBT device serves as the lower bridge-arm switch transistor of the A phase, the third IGBT device and the fourth IGBT device serve as the middle bridge-arm switch transistor. In the block S300, the modulation wave is compared with the triangular carrier wave, and the switch transistor driving signal of each IGBT device is generated finally. Actually, the switch transistor driving signal of the first IGBT device, the switch transistor driving signal of the second IGBT device, the switch transistor driving signal of the third IGBT device, the switch transistor driving signal of the fourth IGBT device are generated. That is, there are four switch transistor driving signals are generated.

The process of how the four switch transistor driving signals are generated by comparing the modulation wave and the frequency triangular carrier will be explained as below.

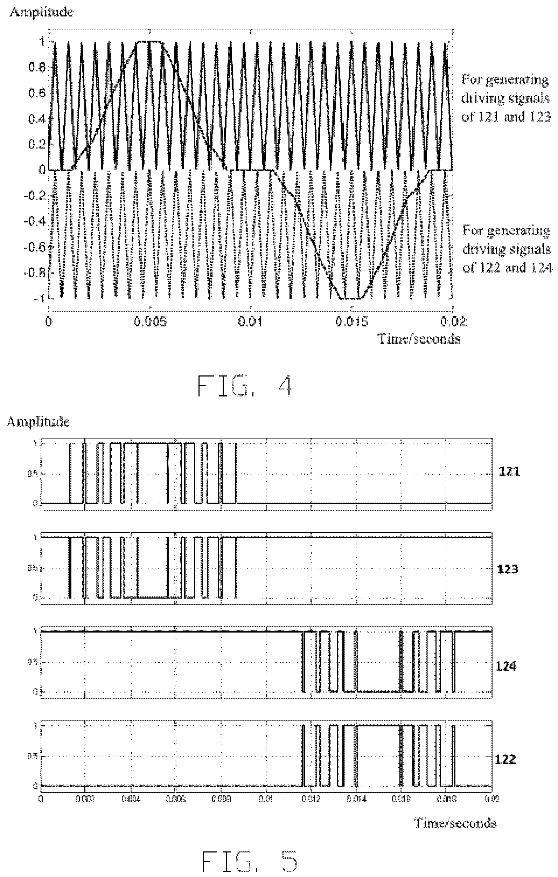

As shown in FIG. 4, the dotted line is the modulation wave of the A phase, due to the embodiment is applied in the three-phase three-level circuit, the modulation wave is compared with the high frequency triangular carrier wave with the amplitude from 0 to 1, and the high frequency triangular carrier wave with the amplitude from -1 to 0.

The dotted line sine wave in FIG. 4 is the waveform of the modulation wave. The amplitude of the high frequency triangular wave in the solid line is from 0 to 1, the amplitude of the high frequency triangular wave in the dotted line is from -1 to 0.

As shown in FIG. 4, the method of acquiring the switch transistor driving signals of the first IGBT device and the third IGBT device is to compare the waveform of the modulation wave with the high frequency triangular carrier with the amplitude from being greater than 0 to 1. At the same time node, when the amplitude of the modulation wave is greater than the amplitude of the high frequency triangular carrier from being greater than 0 to 1, the switch transistor driving signal of the first IGBT device outputs a high voltage level. When the amplitude of the modulation wave is less than the amplitude of the high frequency triangular carrier from being greater than 0 to 1, the switch transistor driving signal of the first IGBT device outputs a low voltage level.

The third IGBT device is complimentary to the first IGBT device. In that means, at the same time node, when the amplitude of the modulation wave is greater than the amplitude of the high frequency triangular carrier from being greater than 0 to 1, the switch transistor driving signal of the third IGBT device outputs a low voltage level. When the amplitude of the modulation wave is less than the amplitude of the high frequency triangular carrier from being greater than 0 to 1, the switch transistor driving signal of the third IGBT device outputs a high voltage level.

As shown in FIG. 4, the method of acquiring the switch transistor driving signals of the second IGBT device and the fourth IGBT device is to compare the waveform of the modulation wave with the high frequency triangular carrier with the amplitude from being greater than -1 to 0. At the same time node, when the amplitude of the modulation wave is greater than the amplitude of the high frequency triangular carrier from being greater than -1 to 0, the switch transistor driving signal of the fourth IGBT device outputs a high voltage level. When the amplitude of the modulation wave is less than the amplitude of the high frequency triangular carrier from being greater than -1 to 0, the switch transistor driving signal of the fourth IGBT device outputs a low voltage level.

The second IGBT device is complimentary to the fourth IGBT device. In that means, at the same time node, when the amplitude of the modulation wave is greater than the amplitude of the high frequency triangular carrier from being greater than -1 to 0, the switch transistor driving signal of the second IGBT device outputs a low voltage level. When the amplitude of the modulation wave is less than the amplitude of the high frequency triangular carrier from being greater than -1 to 0, the switch transistor driving signal of the second IGBT device outputs a high voltage level.

Using the above method, FIG. 5 is obtained finally. The four waveforms in FIG. 5 respectively show the waveform of the switch transistor driving signal of the first IGBT device, the waveform of the switch transistor driving signal of the third IGBT device, the waveform of the switch transistor driving signal of the fourth IGBT device, and the waveform of the switch transistor driving signal of the second IGBT device. All of them are presented square waves.

The waveform of the switch transistor driving signal of the first IGBT device in FIG. 5 is actually a portion of the square wave in FIG. 10. Thus, it may be known that the square wave in FIG. 10 is obtained by FIG. 5, which is obtained by comparing the modulation signal with the high frequency triangular carrier, and so on, the waveforms of the square wave in other figures are obtained by using the above method, it will not repeat in the following.

A manner of the method of DPWMO modulation, which remains the switch transistor being stopped operation in a fixed range of 60 degree, may reduce the loss, but it will cause the zero-sequence component in the fixed range of 60 degree to be shifted to positive or negative, as shown FIG. 9. Especially, when the modulation ratio becomes smaller, it will cause the deviation of the positive and negative buses become greater, which is a reason of the outputting feature being worse.

In the method of discontinuous pulse width modulation provided by the present application, β may be set to be a fixed value, or to be a variation value. β in the embodiment is set to be varied with the modulation ratio. When the modulation ratio becomes greater, β becomes smaller. As shown in FIG. 10, the switch does not perform a switching operation in the vicinity of the zero crossing point, that is, the first IGBT device remains being turned off at the zero crossing point, and the first IGBT device remains being turned on at the peak value. By comparing with FIGS. 10, 16, and 22, the modulation ratio respectively is at 1, 0.75, 0.5, it can be understood that, in the method of discontinuous pulse width modulation provided by the present application, when the modulation ratio becomes greater, the longer time of the first IGBT device remaining being turned on is, and the shorter time of the first IGBT device remaining being turned off at the zero crossing point. When the modulation ratio becomes smaller, the time of the first IGBT device remaining being turned on is, and the time of the first IGBT device remaining being turned off at the zero crossing point.

Under different conditions of the modulation ratio in the method of traditional DPWMO modulation shown in FIGS. 8, 14, and 20, the time of the first IGBT device being turned on in a positive half wave almost remains unchanged, at the cost of the zero-sequence component being quickly increased under a lower modulation ratio. Due to the greater zero-sequence component, the deviation of the positive and negative buses becomes greater, which causes the outputting feature being worse, and the stability is reduced.

As shown in FIGS. 9, 15, and 21, the maximum value of the zero-sequence component in the method of traditional DPWMO modulation quickly increases according to the decreasing of the modulation ratio, and the negative maximum value will directly switch to the negative maximum value, the change is extreme.

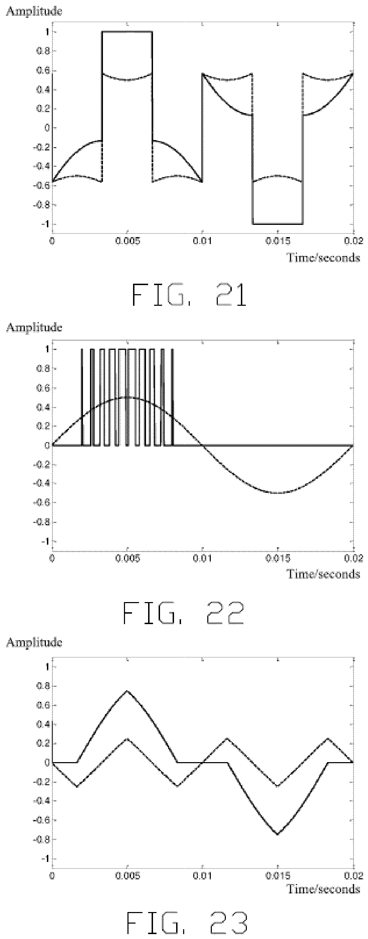

When the modulation ratio m is at 1, it is acceptable, once the modulation ratio decreases, the saw toothing becomes more and more pronounced. When the modulation ratio m is at 0.5, as shown in FIG. 21, the stability is nearly collapsed.

The method of discontinuous pulse width modulation provided by the present application improves the maximum value of the zero-sequence component, and the zero-sequence component also changes relatively moderate.

FIGS. 6, 12, and 18 show the composited waveform of the original signal wave and the switch transistor driving signal of the first IGBT device in the method of traditional SVPWM modulation, there is no time duration of the first IBGT device being continuously turned on in the positive half wave, it will cause the states of the switch being changed frequently, an working efficiency is low, and an energy consumption is high. According to FIGS. 10, 16, and 22, it can be noted that, comparing the method of discontinuous pulse width modulation of the present application with the method of traditional SVPWM modulation, the times of switching the states of the switch is reduced by one-third of the times of switching the states of the switch in the method of traditional SVPWM modulation, the energy consumption is reduced greatly. By comparing FIGS. 7, 11, and 17 of the modulation of traditional SVPWM modulation with FIGS. 11, 17, and 23, the stability of the method of discontinuous pulse width modulation of the present application in related to the method of traditional SVPWM modulation is not fall behind, the stability of the present application is also high.

Thus, the traditional technology must use the method of DPWMO modulation while the modulation ratio is high, and use the method of SVPWM modulation while the modulation ratio is low. It will cause the three-phase inverter circuit to generate oscillation while switching the method of modulation frequently. More than that, two different modulation schemes need to be pre-designed, which is extremely troublesome.

The present application only applies one modulation method, which modulates from the beginning to the end, there is no need to switch the modulation schemes, and there are two advantages in low energy consumption and high stability.

In one embodiment of the present application, the block S300 further includes:

When the vector angle is in a range besides the first angle range, the second angle range, the third angle range, the fourth angle range, the fifth angle range, and the sixth angle range in the 360 degrees, the zero-sequence component is controlled to meet a formular 5.

$$Uz=Umax+Umin \qquad \text{Formula 5}$$

Wherein, Uz represents the zero-sequence component, Umax represents the maximum value of the three-phase voltage; Umin represents the minimum value of the three-phase voltage.

When the vector angle is in the range besides the first angle range, the second angle range, the third angle range, the fourth angle range, the fifth angle range, and the sixth angle range in the 360 degrees, the zero-sequence component is equal to a sum of Umax and Umin. Because of the zero-sequence component is at this value, the amplitude of the modulation wave in the vicinity of the zero crossing point is at 0. That is, the first IGBT device remains in the turn-off state.

In one embodiment of the present application, the β is a predefined fixed value.

In detail, there are several embodiments of selecting β, which may be selected at a fixed value. The greater β is, it represents that the wider angle range of the first IGBT device being maintained in turn-off in the vicinity of the zero crossing point (which is 0 degree and 180 degrees in the positive half wave) is. Meanwhile, the narrower angle range of the first IGBT device being maintained in turn-on near the 90 degrees. There are three intervals of the state of the switch transistor being unchanged, which are 0 degree to β, one-third π plus β to one-third π minus β, π minus β to π. The angle interval length of a sum of the three intervals of the IGBT maintained in turn-off is one-third π. The interval of the IGBT maintained in turn-off of the traditional DPWMO is one-third π to one-third π. That is, the angle interval length of the IGBT maintained in turn-off in two methods is the same, which is one-third π.

Representing on the zero-sequence component, the greater β is, the smaller the maximum value of the zero-sequence component is. The β is set between 0 to one-sixth π. When being set at 0, the modulation scheme is changed to the method of traditional DPWMO modulation scheme. When being set at one-sixth $\pi$, it means that the first IGBT device maintains in turn-off between 0 to one-third $\pi$ and five-sixth $\pi$ and $\pi$, at the same time the first IGBT device loses the angle interval of maintaining in turn-on near 90 degrees.

In one embodiment of the present application, the $\beta$ is a varies value, and the angle value of $\beta$ is controlled to be smaller when the modulation ratio being greater. When the modulation ratio becomes smaller, the angle value of $\beta$ is controlled to be greater.

In detail, there are several embodiments of selecting $\beta$, it may be changed according to the change of the modulation ratio k. In the embodiment of the present application, it is changed according to the change of the modulation ratio k.

The reason why $\beta$ being changed according to the change of the modulation ratio is that, in one hand is the value of $\beta$ should be greater when the modulation ratio is smaller for obtaining a smaller zero-sequence component, in other hand, the value of $\beta$ should be smaller when the modulation ratio is greater, thus the time of the switch transistor maintained in turn-on near 90 degrees is capable of increasing as much as possible. Because generally the greater the current is, the greater loss of switching the switch transistor for once is. The current near the 90 degrees is greater, the current near the zero point is smaller. Though the sum of the inaction angle of the switch transistor near 90 degrees and the inaction angle of the switch transistor near the zero point is 60 degrees unchanged, a proportion of the inaction angle is greater, which is in favor of decreasing the loss.

The present application further provides a three-phase inverter modulation circuit.

For purpose of writing concisely, the present application only labels each component in each embodiment of the three-phase inverter modulation circuit, but does not label the same component existed in the embodiments of the method of discontinuous pulse width modulation.

As shown in FIG. 2, in one embodiment of the present application, the three-phase inverter modulation circuit incudes a three-phase inverter circuit 10, a sampling circuit 20, and a modulator 30.

The sampling circuit 20 is electrically connected with the three-phase inverter circuit 10. The modulator 30 is electrically connected with the three-phase inverter circuit 10. The modulator 30 is further electrically connected with the sampling circuit 20. The modulator 30 is configured to execute the method of discontinuous pulse width modulation in any foregoing embodiments.

In detail, the embodiment introduces a circuit in a T type three-phase three-level.

Certainly, the method of discontinuous pulse width modulation also may be applied into the circuit in a three-phase two-level or neutral point clamped three-level inverter circuit. The present application only introduces the circuit structure of the circuit in the T type three-phase three-level, and the structure of other circuits are not repeated.

As shown in FIG. 3, in one embodiment of the present application, the three-phase inverter circuit 10 includes a DC bus 110, a neural line 190, a first IGBT device 121, a second IGBT device 122, a third IGBT device 123, a fourth IGBT device 124, a fifth IGBT device 131, a sixth IGBT device 132, a seventh IGBT device 133, an eighth IGBT device 134, a ninth IGBT device 141, a tenth IGBT device 142, a eleventh IGBT device 143, a twelfth IGBT device 144, a first filter inductor 151, a second filter inductor 152, a third filter inductor 153, a first filter capacitor 160, a second filter capacitor 170, and a third filter capacitor 180.

There is a positive bus capacitor 111 and a negative bus capacitor 112 on the DC bus 110. There is a point W disposed on a connectable link between the positive bus capacitor 111 and the negative bus capacitor 112. The point W is electrically connected with the neutral wire 190.

An end of the first IGBT device 121 is electrically connected with the positive bus capacitor 111, and another end of the first IGBT device 121 is electrically connected with the second IGBT device 122. An end of the second IGBT device 122 is electrically connected with the first IGBT device 121, and another end of the second IGBT device 122 is electrically connected with the negative bus capacitor 112. An end of the third capacitor 123 is electrically connected with the point W, and another end of the third IGBT device 123 is electrically connected with the fourth IGBT device 124. An end of the fourth IGBT device 124 is electrically connected with the third IGBT device 123, and another end of the fourth IGBT device 124 is electrically connected with the first filter inductor 151.

An end of the first filter capacitor 151 is electrically connected with the fourth IGBT device 124, and another end of the first filter capacitor 151 is electrically connected with an A phase voltage outputting point.

An end of the fifth IGBT device 131 is electrically connected with the positive capacitor 111, and another end of the IGBT device 131 is electrically connected with the sixth IGBT device 132. An end of the sixth IGBT device 132 is electrically connected with the fifth IGBT device 131, and another end of the sixth IGBT device 132 is electrically connected with the negative bus capacitor 112. An end of the seventh IGBT device 133 is electrically connected with the point W, and another end of the seventh IGBT device 133 is electrically connected with the eighth IGBT device 134. An end of the eighth IGBT device 134 is electrically connected with the seventh IGBT device 133, and another end of the eighth IGBT device 134 is electrically connected with the second filter inductor 152.

An end of the second filter inductor 152 is electrically connected with the eighth IGBT device 134, and another end of the second filter inductor 152 is electrically connected with a B phase voltage outputting point.

An end of the ninth IGBT device 141 is electrically connected with the positive bus capacitor 111, and another end of the ninth IGBT device 141 is electrically connected with the tenth IGBT device 142. An end of the tenth IGBT device 142 is electrically connected with the ninth IGBT device 141, and another end of the tenth IGBT device 142 is electrically connected with the negative bus capacitor 112. An end of the eleventh IGBT device 143 is electrically connected with the point W, and another terminal of the eleventh IGBT device 143 is electrically connected with the twelfth IGBT device 144. An end of the twelfth IGBT device 144 is electrically connected with the eleventh IGBT device 143, and another end of the twelfth IGBT device 144 is electrically connected with the third filter inductor 153.

An end of the third filter inductor 153 is electrically connected with the twelfth IGBT device 144, and another end of the third filter inductor 153 is electrically connected with a C phase voltage outputting point.

The first IGBT device 121, the second IGBT device 122, the fourth IGBT device 124, and the first filter inductor 151 are electrically connected with a same point X. The fifth IGBT device 131, the sixth IGBT device 132, the eighth IGBT device 134, and the second filter inductor 152 are electrically connected with a same point Y. The ninth IGBT device 141, the tenth IGBT device 142, the twelfth IGBT device 144, and the third filter inductor 153 are electrically connected with a same point Z.

The three-phase inverter circuit 10 further includes the first filter capacitor 160, the second filter capacitor 170, and the third filter capacitor 180.

The first filter capacitor 160, an upper plate 161 of the first filter capacitor 160 is electrically connected with a connectable link between the first filter inductor 151 and the A phase voltage outputting point.

The lower plate 162 of the first filter capacitor 160 is electrically connected with the neutral line 190. The second filter capacitor 170, an upper plate 171 of the second filter capacitor 170 is electrically connected with a connectable link between the second filter inductor 152 and the B phase voltage outputting point. A lower plate 172 of the second filter capacitor 170 is electrically with the neutral line 190.

The third filter capacitor 180, an upper plate 181 of the third filter capacitor 180 is electrically connected with a connectable link between the third filter inductor 153 and the C phase voltage outputting point. A lower plate 182 of the third filter capacitor 180 is electrically connected with the neutral line 190.

The referred method of discontinuous pulse width modulation in the foregoing embodiments is configured to generate the modulation wave between the point X and the neutral line 190, and generate the switch transistor driving signal of the first IGBT device 121, the switch transistor driving signal of the second IGBT device 122, the switch transistor driving signal of the third IGBT device 123, and the switch transistor driving signal of the fourth IGBT device 124.

The referred method of discontinuous pulse width modulation in the foregoing embodiments is configured to generate the modulation wave between the point Y and the neutral line 190, and generate the switch transistor driving signal of the fifth IGBT device 131, the switch transistor driving signal of the sixth IGBT device 132, the switch transistor driving signal of the seventh IGBT device 133, and the switch transistor driving signal of the eighth IGBT device 134.

The referred method of discontinuous pulse width modulation in the foregoing embodiments is configured to generate the modulation wave between the point Z and the neutral line 190, and generate the switch transistor driving signal of the ninth IGBT device 141, the switch transistor driving signal of the tenth IGBT device 142, the switch transistor driving signal of the eleventh IGBT device 143, and the switch transistor driving signal of the twelfth IGBT device 144.

In detail, the switch transistor of the three-phase inverter circuit 10 may be selected IGBT device, also may be selected as MOSFET device. Antiparallel diodes shown in FIG. 3 are the body diodes in the IGBT device, which is a partial of the IGBT device. When selecting the MOSFET device, a diode is extra antiparallel. The protection scope of the present application does not being effected by using switch transistor in any types.

Two ends of the positive bus capacitor 111 are provided with a positive bus voltage Vbus, and two ends of the negative bus capacitor 112 are provided with a negative bus voltage -Vbus. The point W between the positive bus capacitor 111 and the negative bus capacitor 112 is the zero point.

As shown in FIG. 3, the first IGBT device 121, the second IGBT device 122, the third IGBT device 123, and the fourth IGBT device 124 form a bridge arm of the A phase. The first IGBT device 121 serves as the upper bridge-arm switch transistor of the A phase, the second IGBT device 122 serves as the lower bridge-arm switch transistor of the A phase, the third IGBT device 123 and the fourth IGBT device 124 serve as the middle bridge-arm switch transistor.

The fifth IGBT device 131, the sixth IGBT device 132, the seventh IGBT device 133, and the eighth IGBT device 134 form a bridge arm of the B phase. The fifth IGBT device 131 serves as the upper bridge-arm switch transistor of the B phase, the sixth IGBT device 132 serves as the lower bridge-arm switch transistor of the B phase, the seventh IGBT device 133 and the eighth IGBT device 134 serve as the middle bridge-arm switch transistor.

The ninth IGBT device 141, the tenth IGBT device 142, the eleventh IGBT device 143, and the twelfth IGBT device 144 form a bridge arm of the C phase. The ninth IGBT device 141 serves as the upper bridge-arm switch transistor of the C phase, the tenth IGBT device 142 serves as the lower bridge-arm switch transistor of the C phase, the eleventh IGBT device 143 and the twelfth IGBT device 144 serve as the middle bridge-arm switch transistor.

A relationship between the upper bridge-arm switch transistor and the lower bridge-arm switch transistor in each bridge of each phase is being conducted complementarily to each other.

Using the bridge-arm of the A phase as an example, it is understood that, the high level outputted by the switch transistor driving signal of the IGBT device represents the IGBT device being turned on, the low level outputted by the switch transistor driving of the IGBT device represents the IGBT device being turned on. Therefore, there are three situations of the voltage of the point X.

When the first IGBT device 121 turns on, the second IGBT device 122 turns off, the third IGBT device 123 and the fourth IGBT device 124 turn off, the voltage of the point X is positive Vbus.

When the first IGBT device 121 turns off, the second IGBT device 122 turns off, the third IGBT device 123 and the fourth IGBT device 124 are turned on, the voltage of the point X is 0.

When the first IGBT device 121 turns off, the second IGBT device 122 turns on, the third IGBT device 123 and the fourth IGBT device 124 turn off, the voltage of the point X is negative Vbus.

The displayed positive half wave of the waveform of the square wave of the switch transistor driving signal as shown in FIGS. 10, 16, and 22 only includes the positive Vbus and 0, the displayed negative half wave only includes the negative Vbus and 0.

About the referred term of "continuous" of the present application, it should be noted that, once there is a switching of the switch state in one period, it can be determined that the turn off is not continuous, and the conducting is not continuous. The period may be set as 20 microseconds to 1 milliseconds.

In FIGS. 6-23, all the abscissas are time, and all the ordinates are an amplitude generated by the normalized voltage values.

The technical features of the embodiments described above may be arbitrarily combined, and the method steps are not limited in the order of execution. To make the description concise, all possible combinations of various technical features in the above embodiments have not been described. However, as long as there are no contradictions in the combinations of these technical features, they should be considered within the scope of this specification.

The above embodiments only express several embodiments of the present application, and their descriptions are more specific and detailed, but cannot be understood as limiting the scope of the present application. For ordinary technical personnel in this field, several modifications and improvements can be made without departing from the concept of the present application, all of which fall within the scope of protection of present application. Therefore, the scope of protection of the present application should be based on the attached claims.

## Claims

1. A method of discontinuous pulse width modulation, charactered in that, the method of discontinuous pulse width modulation is applied in a three-phase inverter (10), the method of discontinuous pulse width modulation comprises:

   generating a three-phase voltage original signal wave;
   adding a zero-sequence component into the three-phase voltage original signal wave to obtain a signal wave added with the zero-sequence component;
   comparing the signal wave added with the zero-sequence component as a modulation wave with a high frequency triangular carries wave to generate a switch transistor driving signal of each IGBT device; and
   controlling each IGBT device to operate according to the switch transistor driving signal of each IGBT device.

2. The method of claim **1,** wherein the generating a three-phase voltage original signal wave comprises:

   generating the three-phase voltage original signal wave; a voltage value of each phase in the three-phase voltage original signal wave is calculated by a formular 1;

$$\begin{cases} U_a = m\cos\theta + U_{ah} \\ U_b = m\cos\left(\theta - \dfrac{2\pi}{3}\right) + U_{bh} \\ U_c = m\cos\left(\theta + \dfrac{2\pi}{3}\right) + U_{ch} \end{cases}$$

Formular 1

wherein m represents a modulation ratio; θ represents a vector angle; Ua represents a voltage value of the A phase; Ub represents a voltage value of a B phase; Uc represents a voltage value of a C phase; Uah represents a harmonic component of the A phase; Ubh represents a harmonic component of the B phase; Uch represents a harmonic component of the C phase; and

obtaining a minimum value of the three-phase voltage and a maximum value of the three-phase voltage; the definition manner of the minimum value and the maximum value of the three-phase voltage is as a formular 2;

$$\begin{cases} U_{max} = \max\left(U_a, U_b, U_c\right) \\ U_{min} = \min\left(U_a, U_b, U_c\right) \end{cases} \quad \text{Formular 2}$$

wherein, Umax represents the maximum value of the three-phase voltage; Umin represents the minimum value of the three-phase voltage; Ua represents a voltage value of the A phase; Ub represents a voltage value of the B phase; Uc represents a voltage value of the C phase.

3. The method of claim 2, wherein the adding a zero-sequence component into the three-phase voltage original signal wave to obtain a signal wave added with the zero-sequence component comprises:

defining zero-sequence component; an expression of the zero-sequence component is shown as a formular 3;

$$U_z = -kU_{max} - (1-k)U_{min} + (2k-1) \quad \text{Formular 3}$$

wherein Uz represents the zero-sequence component; Umax represents the maximum value of the three-phase voltage; Umin represents the minimum value of the three-phase voltage; k represents a coefficient of calculating the zero-sequence component.

4. The method of claim 3, wherein the adding a zero-sequence component into the three-phase voltage original signal wave to obtain a signal wave added with the zero-sequence component further comprises:

adding the zero-sequence component into the voltage value of each phase in the three-phase voltage original signal wave to obtain the signal wave added with the zero-sequence component; the formular of the voltage value of each phase of the signal wave added with the zero-sequence component is a formular 4;

$$\begin{cases} U_{as} = U_a + U_z \\ U_{bs} = U_b + U_z \\ U_{cs} = U_c + U_z \end{cases} \quad \text{Formular 4}$$

wherein, Uas represents the voltage value of the A phase added with the zero-sequence; Ubs the voltage value of the B phase added with the zero-sequence; Ucs represents the voltage value of the C phase added with the zero-sequence.

5. The method of claim 4, wherein the comparing the signal wave added with the zero-sequence component as a modulation wave with a high frequency triangular carries wave to generate a switch transistor driving signal of each IGBT device comprises:

controlling the coefficient of calculating the zero-sequence component to be taken at 0, when the vector angle is located in a first angle range; the first angle range is a range being greater than or equal to 0 and less than or equal to one-third of π minus β;
controlling the coefficient of calculating the zero-sequence component to be taken at 0, when the vector angle is located in a second angle range; the second angle range is a range being greater than or equal to two-thirds π plus β and less than or equal to π minus β;
controlling the coefficient of calculating the zero-sequence component to be taken at 0, when the vector angle is located in a third angle range; the third angle range is a range being greater than or equal to four-thirds π plus β and less than or equal to five-thirds of $\pi$ minus $\beta$;

controlling the coefficient of calculating the zero-sequence component to be taken at 1, when the vector angle is located in a fourth angle range; the fourth angle range is a range being greater than or equal to one-third $\pi$ plus $\beta$ and less than or equal to two-thirds of $\pi$ minus $\beta$;

controlling the coefficient of calculating the zero-sequence component to be taken at 1, when the vector angle is located in a fifth angle range; the fifth angle range is a range being greater than or equal to $\pi$ plus $\beta$ and less than or equal to four-thirds of $\pi$ minus $\beta$; and

controlling the coefficient of calculating the zero-sequence component to be taken at 1, when the vector angle is located in a sixth angle range; the sixth angle range is a range being greater than or equal to five-thirds $\pi$ plus $\beta$ and less than or equal to 0 minus $\beta$. B is a predefined angle value.

6. The method of claim 5, wherein the comparing the signal wave added with the zero-sequence component as a modulation wave with a high frequency triangular carries wave to generate a switch transistor driving signal of each IGBT device further comprises:

controlling the zero-sequence component to meet with a formular 5, when the vector angle is in a range besides the first angle range, the second angle range, the third angle range, the fourth angle range, the fifth angle range, and the sixth angle range in the 360 degrees;

$$Uz=Umax+Umin \qquad \text{Formula 5}$$

wherein, Uz represents the zero-sequence component, Umax represents the maximum value of the three-phase voltage; Umin represents the minimum value of the three-phase voltage.

7. The method of claim 6, wherein the $\beta$ is a predefined fixed value.

8. The method of claim 6, wherein the $\beta$ is a varies value, and the angle value of the $\beta$ is controlled to be smaller when the modulation ratio being greater; when the modulation ratio becomes smaller, the angle value of $\beta$ is controlled to be greater.

9. A three-phase inverter modulation circuit, wherein the three-phase inverter modulation circuit comprises:

a three-phase inverter circuit (10);
a sampling circuit (20), electrically connected with the three-phase inverter circuit (10); and
a modulator (30), the modulator electrically connected with the three-phase inverter (10), the modulator (30) further electrically connected with the sampling circuit (20); the modulator (30) is configured to execute the method of discontinuous pulse width modulation according to any one of claims 1 to 8.

10. The three-phase inverter modulation circuit of claim 9, wherein the three-phase inverter circuit (10) comprises a DC bus (110), a neural line (190), a first IGBT device (121), a second IGBT device (122), a third IGBT device (123), a fourth IGBT device (124), a fifth IGBT device (131), a sixth IGBT device (132), a seventh IGBT device (133), an eighth IGBT device (134), a ninth IGBT device (141), a tenth IGBT device (142), a eleventh IGBT device (143), a twelfth IGBT device (144), a first filter inductor (151), a second filter inductor (152), a third filter inductor (153), a first filter capacitor (160), a second filter capacitor (170), and a third filter capacitor (180);

the DC bus (110), there is a positive bus capacitor (111) and a negative bus capacitor (112) on the DC bus (110);
there is a point (W) disposed on a connectable link between the positive bus capacitor (111) and the negative bus capacitor (112);
the neutral line (190), being electrically connected with the point (W);
an end of the first IGBT device (121) being electrically connected with the positive bus capacitor (111), and another end of the first IGBT device (121) being electrically connected with the second IGBT device (122);
an end of the second IGBT device (122) being electrically connected with the first IGBT device (121), and another end of the second IGBT device (122) being electrically connected with the negative bus capacitor (112);
an end of the third capacitor (123) is electrically connected with the point (W), and another end of the third IGBT device (123) being electrically connected with the fourth IGBT device (124);
an end of the fourth IGBT device (124) being electrically connected with the third IGBT device (123), and another end of the fourth IGBT device (124) being electrically connected with the first filter inductor (151);
an end of the first filter capacitor (151) being electrically connected with the fourth IGBT device (124), and another end of the first filter capacitor (151) being electrically connected with an A phase voltage outputting point;

an end of the fifth IGBT device (131) being electrically connected with the positive capacitor (111), and another end of the IGBT device (131) being electrically connected with the sixth IGBT device (132);

an end of the sixth IGBT device (132) being electrically connected with the fifth IGBT device (131), and another end of the sixth IGBT device (132) being electrically connected with the negative bus capacitor (112);

an end of the seventh IGBT device (133) being electrically connected with the point (W), and another end of the seventh IGBT device (133) being electrically connected with the eighth IGBT device (134);

an end of the eighth IGBT device (134) being electrically connected with the seventh IGBT device (133), and another end of the eighth IGBT device (134) being electrically connected with the second filter inductor (152);

an end of the second filter inductor (152) being electrically connected with the eighth IGBT device (134), and another end of the second filter inductor (152) being electrically connected with a B phase voltage outputting point;

an end of the ninth IGBT device (141) being electrically connected with the positive bus capacitor (111), and another end of the ninth IGBT device (141) being electrically connected with the tenth IGBT device (142);

an end of the tenth IGBT device (142) being electrically connected with the ninth IGBT device (141), and another end of the tenth IGBT device (142) being electrically connected with the negative bus capacitor (112);

an end of the eleventh IGBT device (143) being electrically connected with the point (W), and another terminal of the eleventh IGBT device (143) being electrically connected with the twelfth IGBT device (144);

an end of the twelfth IGBT device (144) being electrically connected with the eleventh IGBT device (143), and another end of the twelfth IGBT device (144) being electrically connected with the third filter inductor (153);

an end of the third filter inductor (153) being electrically connected with the twelfth IGBT device (144), and another end of the third filter inductor (153) being electrically connected with a C phase voltage outputting point;

wherein the first IGBT device (121), the second IGBT device (122), the fourth IGBT device (124), and the first filter inductor (151) are electrically connected with a same point (X); the fifth IGBT device (131), the sixth IGBT device (132), the eighth IGBT device (134), and the second filter inductor (152) are electrically connected with a same point (Y); the ninth IGBT device (141), the tenth IGBT device (142), the twelfth IGBT device (144), and the third filter inductor (153) are electrically connected with a same point (Z);

wherein the three-phase inverter circuit (10) further comprises:

the first filter capacitor (160), an upper plate (161) of the first filter capacitor (160) being electrically connected with a connectable link between the first filter inductor (151) and the A phase voltage outputting point, a lower plate (162) of the first filter capacitor (160) being electrically connected with the neutral line (190);

the second filter capacitor (170), an upper plate (171) of the second filter capacitor (170) being electrically connected with a connectable link between the second filter inductor (152) and the B phase voltage outputting point; an lower plate (172) of the second filter capacitor (170) being electrically with the neutral line (190); and

the third filter capacitor (180), an upper plate (181) of the third filter capacitor (180) being electrically connected with a connectable link between the third filter inductor (153) and the C phase voltage outputting point; an lower plate (182) of the third filter capacitor (180) being electrically connected with the neutral line (190);

wherein the method of discontinuous pulse width modulation in any one of claims 1 to 8, configured to generate the modulation wave between the point (X) and the neutral line (190), and generate the switch transistor driving signal of the first IGBT device (121), the switch transistor driving signal of the second IGBT device (122), the switch transistor driving signal of the third IGBT device (123), and the switch transistor driving signal of the fourth IGBT device (124);

wherein the method of discontinuous pulse width modulation in any one of claims 1 to 8, configured to generate the modulation wave between the point (Y) and the neutral line (190), and generate the switch transistor driving signal of the fifth IGBT device (131), the switch transistor driving signal of the sixth IGBT device (132), the switch transistor driving signal of the seventh IGBT device (133), and the switch transistor driving signal of the eighth IGBT device (134); and

wherein the method of discontinuous pulse width modulation in any one of claims 1 to 8, configured to generate the modulation wave between the point (Z) and the neutral line (190), and generate the switch transistor driving signal of the ninth IGBT device (141), the switch transistor driving signal of the tenth IGBT device (142), the switch transistor driving signal of the eleventh IGBT device (143), and the switch transistor driving signal of the twelfth IGBT device (144).

S100

Generating a three-phase voltage original signal wave

S200

Adding a zero-sequence component into the three-phase voltage original signal wave to obtain a wave added with the zero-sequence component

S300

Comparing the signal wave added with the zero-sequence component served as a modulation wave with a high frequency triangular carrier wave to generate a switch transistor driving signal of each IGBT device

S400

Controlling each IGBT device to operate according to the switch transistor driving signal of each IGBT device

FIG. 1

Three-phase inverter circuit 10

Sampling circuit 20

Modulator 30

FIG. 2

FIG. 3

Amplitude

For generating
driving signals
of 121 and 123

For generating
driving signals
of 122 and 124

Time/seconds

FIG. 4

Amplitude

121

123

124

122

Time/seconds

FIG. 5

FIG. 6

FIG. 7

FIG. 8

FIG. 9

FIG. 10

FIG. 11

FIG. 12

FIG. 13

FIG. 14

Amplitude

FIG. 15

Amplitude

FIG. 16

Amplitude

FIG. 17

FIG. 18

FIG. 19

FIG. 20

FIG. 21

FIG. 22

FIG. 23

## INTERNATIONAL SEARCH REPORT

International application No.

**PCT/CN2022/098699**

| A. | CLASSIFICATION OF SUBJECT MATTER |
| --- | --- |

H02M7/538(2007.01)i;H02M7/42(2006.01)n

According to International Patent Classification (IPC) or to both national classification and IPC

| B. | FIELDS SEARCHED |
| --- | --- |

Minimum documentation searched (classification system followed by classification symbols)

H02M7/-

Documentation searched other than minimum documentation to the extent that such documents are included in the fields searched

Electronic data base consulted during the international search (name of data base and, where practicable, search terms used)

CNABS, CNTXT, VEN, USTXT, JPTXT, EPTXT, WOTXT, CNKI, 万方, WANFANG, 百度, BAIDU, IEEE: 浙江艾罗网络能源技术股份有限公司, 魏琪康, 刘超厚, 施鑫淼, 张祥平, 王建星, 魏斯旺, 孙宇, 不连续脉宽调制, 非连续脉宽调制, DPWM, 零序分量, 调制波, 调制比, 三角载波, 逆变器, 比较, discontinuous plus width modulation, zero sequence component, zero-sequence component, triangular carrier, compar+.

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 111064377 A (INSTITUTE OF ELECTRICAL ENGINEERING, CHINESE ACADEMY OF SCIENCES) 24 April 2020 (2020-04-24) description, paragraphs 16-189, and figures 1-17 | 1-5, 9 |
| Y | CN 111064377 A (INSTITUTE OF ELECTRICAL ENGINEERING, CHINESE ACADEMY OF SCIENCES) 24 April 2020 (2020-04-24) description, paragraphs 16-189, and figures 1-17 | 10 |
| Y | CN 104201919 A (JIANGSU ZEVERSOLAR NEW ENERGY CO., LTD.) 10 December 2014 (2014-12-10) figure 9 | 10 |
| A | CN 110912436 A (INSTITUTE OF ELECTRICAL ENGINEERING, CHINESE ACADEMY OF SCIENCES) 24 March 2020 (2020-03-24) entire document | 1-10 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **02.2月2023（02.02.2023）** | **22 February 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

| International application No. |
| --- |
| **PCT/CN2022/098699** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 109921672 A (SHANGHAI BAOZHUN POWER TECHNOLOGY CO., LTD. et al.) 21 June 2019 (2019-06-21)<br>      entire document | 1-10 |

Form PCT/ISA/210 (second sheet) (July 2022)

## INTERNATIONAL SEARCH REPORT
### Information on patent family members

| | | | |
|---|---|---|---|
| International application No. | | | |
| **PCT/CN2022/098699** | | | |

| Patent document cited in search report | | | Publication date (day/month/year) | Patent family member(s) | | | Publication date (day/month/year) |
|---|---|---|---|---|---|---|---|
| CN | 111064377 | A | 24 April 2020 | CN | 111064377 | B | 11 May 2021 |
| CN | 104201919 | A | 10 December 2014 | CN | 104201919 | B | 16 August 2019 |
| CN | 110912436 | A | 24 March 2020 | CN | 110912436 | B | 26 February 2021 |
| CN | 109921672 | A | 21 June 2019 | CN | 109921672 | B | 03 July 2020 |